# EUROPÄISCHE PATENTANMELDUNG

(11) **EP 3 290 721 A1**
(43) Veröffentlichungstag der Anmeldung: **07.03.2018**
(21) Anmeldenummer: 16186306.3
(22) Anmeldetag: 30.08.2016
(51) Int. Cl.: F16B 13/06, E04B 1/41

(54) **ABSTANDSSENSOR AN ANKERSPITZE**

(71) Anmelder: HILTI Aktiengesellschaft, 9494 Schaan (LI)
(72) Erfinder: Teufelhart, Stefan, 9476 Weite (CH)
(74) Vertreter: Hilti Aktiengesellschaft Corporate Intellectual Property

(57) **Zusammenfassung**

Die Erfindung betrifft eine Befestigungsanordnung, aufweisend einen Anker (1), der an einem vorderen Bereich (32) einen Ankerbereich (22) zum Verankern des Ankers in einem Loch (99) in einem Substrat (5) und an einem rückwärtigen Bereich (33) eine Lastaufnahmeeinrichtung (18) zum Einleiten einer Zugkraft aufweist. Erfindungsgemäss ist vorgesehen, dass ein Sensor (40) zur Messung eines Abstandes des vorderen Bereichs von einer Referenzposition des Substrats vorgesehen ist. Die Erfindung betrifft ferner ein Messverfahren unter Verwendung einer solchen Befestigungsanordnung.

## Beschreibung

Die Erfindung betrifft eine Befestigungsanordnung gemäss dem Oberbegriff des Anspruchs 1. Eine solche Befestigungsanordnung weist einen Anker auf, der an einem vorderen Bereich einen Ankerbereich zum Verankern des Ankers in einem Loch in einem Substrat und an einem rückwärtigen Bereich eine Lastaufnahmeeinrichtung zum Einleiten einer Zugkraft aufweist. Die Erfindung betrifft ferner ein Messverfahren unter Verwendung einer solchen Befestigungsanordnung.

Spreizanker für Befestigungsanordnungen sind beispielsweise aus der EP 0514342 A1 bekannt. Sie werden in ein Loch in einem Substrat eines Bauteils, z. B. einer Wand oder einer Decke, eingesetzt und dann durch Anziehen einer am Bolzen des Spreizankers angeordneten Mutter vorgespannt. Beim Vorspannen des Bolzens wird ein am Bolzen angeordneter Spreizkörper in einen als Spreizhülse ausgebildeten Dübelkörper eingezogen, wodurch der Dübelkörper radial aufgeweitet und radial nach aussen gedrängt wird und dadurch der Spreizanker im Substrat verankert wird. Zum Aufbringen einer definierten Vorspannung können bei Spreizankern Drehmomentschlüssel eingesetzt werden.

Die DE 4421959 A1 beschreibt ein als eine Art Unterlegscheibe ausgebildetes Vorspannkontrollelement, das an einem Spreizanker zum Einsatz kommt, und das das Erreichen der erforderlichen Vorspannung erkennbar machen soll.

Die DE 4037077 A1 beschreibt eine Einrichtung zur faseroptischen Messung der Vorspannung in einem Schwerlastanker, bei dem der zur Messung verwendete faseroptische Lichtwellenleiter in einer druckverteilenden Unterlegscheibe angeordnet ist.

Die WO 2015/150544 A2 beschreibt eine Schraube mit einem integrierten Sensor, welcher Licht in ein im Inneren der Schraube axial verlaufendes Sackloch aussendet und ein Echosignal auswertet. Aus diesem Signal werden Informationen zu einer Deformation der Schraube und einer Dehnungsbelastung der Schraube gewonnen.

Die DE 19705346 C1 zeigt eine Vorrichtung zum Herstellen und Überwachen einer Schraubverbindung, mit der zwei Bauteile mit einer vorbestimmten Vorspannkraft aneinandergepresst werden. Gemäss DE 19705346 C1 wird eine in der Schraube axial verlaufende, als Sackloch ausgebildete Messbohrung vorgesehen, an der eine Tiefenmessung durchgeführt wird, wobei eine entsprechende Tiefenmessvorrichtung extern, nämlich im Schraubwerkzeug eines Automatik-Schraubers oder Hand-Schraubers angeordnet wird. Bei der Tiefenmessung wird ein mit Vorspannkraft eng korreliertes Signal gewonnen.

Aufgabe der Erfindung ist es, eine Befestigungsanordnung mit einem Anker und ein Messverfahren an einer solchen Befestigungsanordnung anzugeben, mit denen in besonders einfacher Weise eine besonders leistungsfähige und zuverlässige Befestigung möglich ist.

Die Aufgabe wird erfindungsgemäss durch eine Befestigungsanordnung mit den Merkmalen des Anspruchs 1 und ein Messverfahren mit den Merkmalen des Anspruchs 12 gelöst. Bevorzugte Ausführungsformen sind in den abhängigen Ansprüchen angegeben.

Eine erfindungsgemässe Befestigungsanordnung ist dadurch gekennzeichnet, dass ein Sensor zur Messung eines Abstandes des vorderen Bereichs von einer Referenzposition des Substrats vorgesehen ist.

Die Erfindung basiert auf der Erkenntnis, dass die Vorspannung im Bolzen, welche bei reinen Schraubenverbindungen bestehend aus Schrauben, Muttern und Unterlegscheiben in der Regel von zentraler Bedeutung für die Wirkung ist, und welche daher im Stand der Technik häufig sensorisch überwacht wird, bei als Spreizankern ausgeführten Ankern eine geringere Bedeutung haben kann. Denn der Spreizmechanismus eines als Spreizanker ausgebildeten Ankers ermöglicht aufgrund des Spreizprinzips ein Nachspreizen des Ankers, so dass bei einem Spreizanker auch nach einem Absinken der Vorspannung häufig noch eine Verankerung möglich ist.

Weiterhin wurde erkannt, dass bei solchen Spreizankern die Position des vorderen Bereichs längs des Lochs, also die Position desjenigen Bereichs, in dem der Ankerbereich mit dem Spreizmechanismus angeordnet ist, und insbesondere Änderungen dieser Position über der Zeit, vorteilhaftere Indikatoren für die aktuelle Leistungsfähigkeit der Befestigungsanordnung seien können. So geht nämlich das anfängliche Spreizen und gegebenenfalls ein darauf folgendes Nachspreizen regelmässig mit einer Verschiebung am Spreizmechanismus einher. Folglich kann eine, insbesondere automatisierte, Überwachung der Position des dem Spreizmechanismus zugeordneten vorderen Bereichs im Loch eine Überwachung des Spreizverhaltens und damit des Verankerungsverhaltens ermöglichen, was die Leistungsfähigkeit und Zuverlässigkeit von Befestigungsanordnungen in besonders einfacher Weise erhöhen kann.

Hier setzt die Erfindung an und sieht einen Sensor vor, der den Abstand des vorderen Bereichs des Ankers, insbesondere des vorderen Bereichs seines Bolzens, von einem auf dem Substrat oder im Substrat angeordneten Referenzpunkt messen und ein mit diesem Abstand korreliertes Signal, insbesondere elektrisches Signal, ausgeben kann. Dies beruht auf der Erkenntnis, dass das Substrat, beispielsweise ein Betonsubstrat, bei den typischen Anwendungen eines Ankers vergleichsweise steif ist, und sich infolgedessen im regulären Betrieb nur wenig verformt. Damit ist ein am Substrat angeordneter Referenzpunkt in der Regel vergleichsweise positionsstabil relativ zum Loch, in dem der Anker verankert ist. Somit können mit einer erfindungsgemässen Abstandsmessung besonders einfach und zuverlässig relevante Positionsdaten des Ankers im Loch erfasst werden, die, wie zuvor erläutert, wiederum Rückschlüsse auf eventuelle Änderungen des Spreizverhaltens des Spreizankers und somit auf die Tragfähigkeit der Befestigungsanordnung erlauben. Auch mögliche Beschädigungen können erkannt werden. Mittels des erfindungsgemässen Sensors kann folglich in besonders einfacher Weise eine besonders leistungsfähige und zuverlässige Befestigung mittels Spreizankern ermöglicht werden.

Ausser zur beschriebenen Bestimmung der Verschiebung des vorderen Bereichs relativ zum Loch und/oder zum umgebenden Substrat können die vom erfindungsgemässen Sensor erhaltenen Signale auch zur direkten oder indirekten Bestimmung anderer Parameter herangezogen werden, beispielsweise zur Bestimmung externer Kräfte oder der Steifigkeit des Systems.

Der Anker, der in der erfindungsgemässen Befestigungsanordnung zum Einsatz kommt, kann beispielsweise ein Spreizanker sein. Unter einem Spreizanker kann insbesondere ein solcher Anker verstanden werden, der an seinem Ankerbereich einen Spreizmechanismus aufweist, welcher sich zum Verankern des Spreizankers aufgrund mechanischer Effekte, vorzugsweise bei Zugkräften im Bolzen des Ankers, spreizt und dabei radial ausdehnt, wodurch der Spreizanker an der Wand des Lochs verankert wird. Der Spreizanker kann auch als Hinterschnittanker ausgeführt sein, welcher in einer Hinterschneidung des Lochs verankert wird, die vorab mit einem separaten Werkzeug oder vom Anker selbst erzeugt wird.

Der Anker kann aber auch ein Verbundanker sein. Unter einem Verbundanker kann insbesondre ein Anker verstanden werden, welcher mittels einer erhärtbaren Masse im Loch festgelegt wird.

Die Lastaufnahmeeinrichtung dient zum Einleiten einer Zugkraft, die insbesondere in Auszugsrichtung gerichtet ist, und besonders bevorzugt auch einer Querkraft, in den Anker, insbesondere in dessen Bolzen. Sie kann insbesondere am Bolzen angeordnet sein. Vorzugsweise ist die Lastaufnahmeeinrichtung als Aussengewinde ausgebildet. Sie kann aber auch beispielsweise als Innengewinde oder als Kopf ausgebildet sein.

Da der vordere Bereich nahe der Spitze des Ankers angeordnet ist, kann der vordere Bereich auch als Spitzenbereich bezeichnet werden. Der vordere Bereich ist vorzugsweise ein vorderer Endbereich. Er kann sich beispielsweise über maximal 50%, 30% oder 10% der Länge des Ankers erstrecken. Der rückwärtige Bereich ist zweckmässigerweise dem vorderen Bereich entgegengesetzt angeordnet. Der vordere Bereich, an dem der Ankerbereich angeordnet ist, kann insbesondere ein vorderer Bereich des Bolzens des Ankers sein. Der rückwärtige Bereich kann insbesondere ein rückwärtiger Bereich des Bolzens des Ankers sein.

Der Sensor dient zur Positionsbestimmung des Ankers in dessen Betriebszustand, also dann, wenn der Anker in das Loch eingeschoben ist und insbesondere dort verankert ist. Demgemäss kann der Sensor insbesondere zur Messung eines Abstandes des im Loch angeordneten vorderen Bereichs von der Referenzposition des Substrats vorgesehen sein. Erforderlichenfalls kann der erfindungsgemässe Sensor auch mit weiteren Sensoren kombiniert werden, so beispielsweise auch mit einem Sensor zur Bestimmung der Vorspannung im Bolzen des Ankers.

Die erfindungsgemässe Befestigungsanordnung kann das Substrat mit dem Loch zur Aufnahme des Ankers umfassen. Das Substrat kann aber auch als ein von der Befestigungsanordnung verschiedenes Teil angesehen werden. Das Substrat kann zweckmässigerweise aus einem mineralischen Baustoff, vorzugsweise Beton, bestehen.

Die Referenzposition kann an der Wand des Substrats vorgesehen sein, beispielsweise an der Wand des Lochs, am Grund des Lochs oder an der vom Loch beabstandeten Aussenoberfläche des Substrats. Die Referenzposition kann sich auch im Inneren des Substrats befinden und dort beispielsweise durch ein im Substrat eingebettetes Referenzobjekt, beispielsweise einen eingebetteten Referenzmagneten, definiert werden. Die Referenzposition kann sich also auf dem Substrat, aber auch im Substrat befinden.

Besonders bevorzugt ist es, dass der Sensor im Anker integriert ist, was insbesondere beinhalten kann, dass sämtliche Sensorkomponenten am Anker angeordnet sind. Da in diesem Fall der Sensor zusammen mit dem Anker installiert wird, kann eine besonders hohe Anwenderfreundlichkeit und eine besonders hohe Zuverlässigkeit gegeben sein.

Es kann aber auch vorgesehen sein, dass zumindest ein Element des Sensors, beispielsweise ein Referenzelement, vom Anker gesondert ist, was insbesondere beinhalten kann, dass dieses Element und der Anker separate Teile sind. Beispielsweise könnte ein Senderelement des Sensors im Substrat angeordnet sein und ein Empfängerelement am Anker. Dies kann im Hinblick auf die Messgenauigkeit vorteilhaft sein, da zumindest ein Element an der Referenzposition angeordnet werden kann. Darüber hinaus kann eine solche Konfiguration Kostenvorteile haben, beispielsweise wenn sich mehrere Sensoren ein Element, beispielsweise ein Senderelement, teilen. Grundsätzlich könnte der Sensor auch komplett vom Anker gesondert sein, beispielsweise wenn der Sensor ein Laser-Triangulationssensor ist oder eine Spule aufweist, in welche der Bolzen des Ankers eintaucht. Vorzugsweise ist aber zumindest ein Element des Sensors am Anker, insbesondere an dessen Bolzen, angeordnet.

Unter anderem könnte der Sensor auf folgenden Messprinzipien beruhen:
1. Messung zwischen Anker und Grund des Lochs mittels
   - Ultraschall, beispielsweise Laufzeitmessung
2. Messung zwischen einem Detektorelement und einem Referenzelement:
   - Referenzelement, beispielsweise Magnet oder Armierungseisen, im Substrat eingebettet oder auf Substratoberfläche (zum Beispiel am Lochgrund, an der Wand des Lochs oder ausserhalb des Lochs) und Detektorelement, beispielsweise Magnetfelddetektor, am Anker
   - Detektorelement im Substrat eingebettet oder auf Substratoberfläche und Referenzelement am Anker
3. Messung zwischen Anker und Wand des Lochs
   - Erfassung der Oberflächenstruktur der Wand des Lochs, zum Beispiel mittels Kamera oder Scannen der Geometrie

Wie schon mehrfach erwähnt ist es zweckmässig, dass der Anker einen Bolzen aufweist. Vorzugsweise ist der vordere Bereich, dessen Abstand von der Referenzposition mittels des Sensors bestimmt wird, ein vorderer Bereich des Bolzens, das heisst es ist bevorzugt, dass der Sensor zur Messung eines Abstandes des vorderen Bereichs des Bolzens von einer Referenzposition des Substrats vorgesehen ist. Denn die Kenntnis über die Lage des vorderen Bereichs des Bolzens, also insbesondere des Bereich, an dem bei einem Spreizanker ein Spreizkörper für einen Dübelkörper vorgesehen ist, erlaubt besonders einfache Rückschlüsse auf den Zustand des Ankers. Insbesondere kann also nach der Erfindung eine Befestigungsanordnung aufweisend einen Anker mit einem Bolzen vorgesehen sein, wobei der Anker an einem vorderen Bereich des Bolzens einen Ankerbereich zum Verankern des Ankers in einem Loch in einem Substrat und an einem rückwärtigen Bereich, insbesondere des Bolzens, eine Lastaufnahmeeinrichtung zum Einleiten einer Zugkraft, vorzugsweise in den Bolzen, aufweist, wobei ein Sensor zur Messung eines Abstandes des vorderen Bereichs des Bolzens von einer Referenzposition des Substrats vorgesehen ist.

Wie schon weiter oben erwähnt ist es besonders bevorzugt, dass der Anker ein Spreizanker ist, welcher an seinem Ankerbereich einen dem Bolzen benachbarten Dübelkörper, insbesondere eine Spreizhülse, sowie einen am Bolzen vorgesehenen Spreizkörper für den Dübelkörper aufweist. Bei derartigen Spreizankern können die mit dem erfindungsgemässen Sensor erhaltenen Messwerte besonders aussagekräftig sein. Der Anker kann insbesondere ein Spreizanker vom Typ kraftkontrolliert spreizender Anker sein.

Der Spreizkörper kann insbesondere zum radialen Verdrängen des Dübelkörpers bei axialer Verschiebung des Spreizkörpers relativ zum Dübelkörper vorgesehen sein, das heisst der Dübelkörper wird vom Spreizkörper radial nach aussen gedrängt und dabei gegen die Wand des Lochs im Substrat gepresst, wenn der Spreizkörper in Auszugsrichtung des Bolzens relativ zum Dübelkörper axial versetzt wird. Bei diesem Vorgang, der insbesondere durch eine am Spreizkörper vorgesehene Schrägfläche bewirkt werden kann und bei dem der Dübelkörper, der vorzugsweise als Spreizhülse ausgebildet ist, auch aufgeweitet werden kann, wird der Spreizanker im Loch verankert. Vorzugsweise verläuft die Auszugsrichtung parallel zur Längsachse des Bolzens und/oder zeigt aus dem Loch heraus. Insbesondere nimmt am Spreizkörper der Abstand der Oberfläche des Spreizkörpers von der Längsachse des Bolzens entgegen der Auszugsrichtung zu.

Besonders zweckmässig ist es, dass der Dübelkörper eine Spreizhülse ist, die den Bolzen zumindest bereichsweise umgibt, und/oder dass der Spreizkörper ein Spreizkonus ist. Hierdurch wird eine besonders gleichmässige Krafteinleitung in Umfangsrichtung erzielt. Vorzugsweise beträgt die Winkelausdehnung der Spreizhülse um die Längsachse des Bolzens zumindest 270°. Der Spreizkonus ist zum Aufspreizen der Spreizhülse, das heisst zum radialen Aufweiten der Spreizhülse, vorgesehen. Der Spreizkonus kann eine mathematisch streng konische Oberfläche haben, muss dies aber nicht.

Insbesondere kann der Richtungsvektor der Auszugsrichtung vom Spreizkörper zur Lastaufnahmeeinrichtung gerichtet sein. Der Abstand der Oberfläche des Spreizkörpers zur Längsachse des Bolzens nimmt vorzugsweise mit zunehmendem Abstand von der Lastaufnahmeeinrichtung zu. Der Dübelkörper ist insbesondere längs des Bolzens verschiebbar am Bolzen angeordnet, insbesondere befestigt. Soweit von "radial" und "axial" die Rede ist, soll sich dies insbesondere auf die Längsachse des Bolzens und/oder des Ankers beziehen, die insbesondere die Symmetrie- und/oder Mittelachse des Bolzens beziehungsweise des Ankers sein kann.

Besonders bevorzugt ist es, dass zumindest ein Element des Sensors, insbesondere ein Senderelement oder ein Empfängerelement, am Bolzen angeordnet ist. Vorzugsweise ist der gesamte Sensor am Bolzen angeordnet. Mit solch einer Anordnung lässt sich der Abstand des vorderen Bereichs des Bolzens von der Referenzposition in besonders einfacher Weise ermitteln.

Zweckmässigerweise weist der Sensor ein Senderelement zum Aussenden eines vorderseitig am Bolzen austretenden Signals auf. Dies kann im Hinblick auf die Messgenauigkeit und die Zuverlässigkeit vorteilhaft sein. Das Signal kann beispielsweise ein Ultraschallsignal sein.

Das Senderelement ist vorzugsweise an der vorderen Stirnseite des Bolzens angeordnet, was im Hinblick auf den Energieaufwand, die Messgenauigkeit und den Herstellungsaufwand vorteilhaft sein kann. Die vordere Stirnseite muss nicht notwendigerweise eben sein, sondern kann beispielsweise auch ein Sackloch aufweisen, in dem das Senderelement und/oder das weiter unten beschriebene Empfängerelement angeordnet ist.

Vorzugsweise weist der Sensor ein Empfängerelement zum Erfassen eines vom Substrat zurückgestrahlten Signals auf, insbesondere eines vom Substrat zum Bolzen zurückgestrahlten Signals. Auch dies kann im Hinblick auf die Messgenauigkeit und die Zuverlässigkeit vorteilhaft sein. Das zurückgestrahlte Signal kann insbesondere ein vom Senderelement ausgesendetes und vom Substrat, beispielsweise dessen Oberfläche, zurückgestrahltes Signal sein. Beispielsweise kann der Sensor für eine Laufzeitmessung eingerichtet sein, insbesondere dann, wenn das Signal ein Ultraschallsignal ist.

Das Empfängerelement ist zweckmässigerweise an der vorderen Stirnseite des Bolzens angeordnet, was im Hinblick auf den Energieaufwand, die Messgenauigkeit und den Herstellungsaufwand vorteilhaft sein kann.

Eine weitere bevorzugte Ausgestaltung der Erfindung liegt darin, dass die Befestigungsanordnung eine Auswerteeinheit aufweist, welche, zur Bestimmung einer möglichen Verschiebung des Ankers, insbesondere einer möglichen Verschiebung seines Bolzens, ein vom Sensor erzeugtes Signal an verschiedenen Zeitpunkten auswerten kann. Demgemäss wird also nicht nur eine Position des vorderen Bereichs, sondern auch eine Änderung dieser Position über der Zeit, mithin eine Verschiebung des vorderen Bereichs erfasst. Eine solche Messung kann im Hinblick auf das Lastverhalten von Ankern besonders aussagekräftig sein. Insbesondere kann der Sensor also ein mit der Verschiebung des Ankers korreliertes Signal, vorzugsweise elektrisches Signal, besonders bevorzugt ein mit der Verschiebung des Bolzens des Ankers korreliertes Signal, vorzugsweise elektrisches Signal, generieren.

Sofern der Anker als Spreizanker ausgeführt ist, ist dieser vorzugsweise ein Spreizanker des Bolzentyps. Bei einem solchen Spreizanker wird der Spreizkörper beim Setzen des Spreizankers durch eine axiale Bewegung des Bolzens relativ zum Dübelkörper in den Dübelkörper eingezogen. Bei einem Spreizanker des Bolzentyps ist der Bolzen vorzugsweise einstückig ausgeführt, insbesondere ist der Spreizkörper einstückig mit benachbarten Bolzenbereichen ausgeführt. Vorzugsweise kann am Bolzen ein Anschlag, beispielsweise eine Ringschulter, ausgebildet sein, der eine Verschiebung des Dübelkörpers vom Spreizkörper hinweg begrenzt.

Alternativ könnte der Spreizanker ein Spreizanker des Hülsentyps sein. Bei einem Spreizanker des Hülsentyps weist der Bolzen eine vom Spreizkörper separate Ankerstange auf, wobei der Spreizkörper vorzugsweise über korrespondierende Gewinde mit der Ankerstange verbunden ist. Das Einziehen des Spreizkörpers in den Dübelkörper beim Setzen des Spreizankers kann dann vorzugsweise zumindest teilweise durch Rotation der Ankerstange relativ zum Spreizkörper bewirkt werden, welche von einem Spindeltrieb, der von den korrespondierenden Gewinden gebildet wird, in eine Axialbewegung des Spreizkörpers relativ zur Ankerstange umgesetzt wird. Insbesondere bei einem Spreizanker des Hülsentyps kann der Dübelkörper, der auch mehrteilig ausgeführt sein kann, auch bis zum Lochmund reichen.

Die Erfindung betrifft auch ein Messverfahren, bei dem eine erfindungsgemässe Befestigungsanordnung bereitgestellt wird und mittels des Sensors ein mit dem Abstand des vorderen Bereichs von der Referenzposition korreliertes Signal erzeugt wird. Demgemäss wird der Sensor bestimmungsgemäss eingesetzt.

Insbesondere kann vorgesehen sein, dass das mit dem Abstand des vorderen Bereichs vom Referenzpunkt korrelierte Signal zur Bestimmung einer möglichen Verschiebung des Ankers an verschiedenen Zeitpunkten ausgewertet wird. Demgemäss wird also nicht nur eine Position des vorderen Bereichs, sondern auch eine Änderung dieser Position über der Zeit, mithin eine Verschiebung des vorderen Bereichs erfasst. Eine solche Messung kann im Hinblick auf das Lastverhalten von Ankern besonders aussagekräftig sein.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

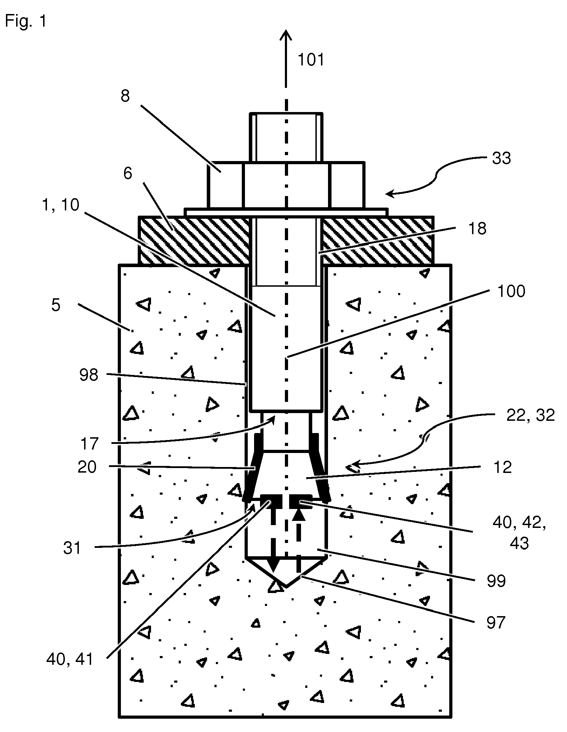

- Figur 1:: eine teilweise längsgeschnittene Ansicht einer Ausführungsform einer erfindungsgemässen Befestigungsanordnung.

Die Figur 1 zeigt ein Ausführungsbeispiel einer Befestigungsanordnung gemäss der Erfindung. Wie Figur 1 zeigt, weist die Befestigungsanordnung ein Substrat 5 mit einem Loch 99 sowie einen beispielhaft als Spreizanker ausgeführten Anker 1 auf, der im Loch 99 verankert ist.

Der Anker 1 wiederum weist einen Bolzen 10 und einen als Spreizhülse ausgebildeten Dübelkörper 20 auf, welcher den Bolzen 10 in einem in einem vorderen Bereich 32 des Bolzens 10 angeordneten Ankerbereich 22 umgibt. Im Ankerbereich 22 weist der Bolzen 10 einen beispielhaft als Spreizkonus dargestellten Spreizkörper 12 für den Dübelkörper 20 auf. Am Spreizkörper 12 weitet sich der Bolzen 10 von hinten nach vorne (d.h. mit zunehmendem Abstand von einer weiter unten im Detail beschriebenen Lastaufnahmeeinrichtung 18) auf, und der Querschnitt des Bolzens 10 nimmt, bei zunehmendem Abstand der Bolzenoberfläche von der Längsachse 100 des Bolzens 10, längs des Bolzens 10 von hinten nach vorne zu. Der Spreizkörper 12 kann den Dübelkörper 20 radial noch aussen drängen, wenn der Spreizkörper 12, insbesondere der Bolzen 10 zusammen mit dem Spreizkörper 12, relativ zum Dübelkörper 20 axial in Auszugsrichtung 101 versetzt wird. Hierdurch kann der Dübelkörper 20 an eine Wand 98 des Lochs 99 gepresst und der Anker 1 im Loch 99 verankert werden. Der Spreizkörper 12 und der Dübelkörper 20 bilden somit einen im Ankerbereich 22 angeordneten Spreizmechanismus zum Verankern des Ankers 1 im Loch 99.

In einem dem vorderen Bereich 32 entgegengesetzt angeordneten rückwärtigen Bereich 33 des Bolzens 10 weist der Bolzen 10 eine Lastaufnahmeeinrichtung 18 zum Einleiten einer in Auszugsrichtung 101 gerichteten Zugkraft in den Anker 1, insbesondere in dessen Bolzen 10, auf. Die Lastaufnahmeeinrichtung 18 ist hier beispielhaft als Aussengewinde dargestellt.

Der Bolzen 10 des Ankers 1 verläuft durch ein Anbauteil 6 hindurch in das Loch 99 im Substrat 5, wobei sich der vordere Bereich 32 des Ankers 1 im Loch 99 im Substrat 5 befindet und der rückwärtige Bereich 33 des Ankers 1 zumindest bereichsweise ausserhalb des Lochs 99. Auf die als Aussengewinde ausgebildete Lastaufnahmeeinrichtung 18 ist eine Mutter 8 aufgeschraubt, welche das Anbauteil 6 am Anker 1 und damit am Substrat 5 hält. Durch Anziehen der Mutter 8 kann eine in Auszugsrichtung 101 gerichtete Zugkraft auf den Bolzen 10 aufgebracht werden, welche den Spreizmechanismus betätigt.

Der Bolzen 10 weist vorzugsweise einen beispielhaft als Ringstufe ausgebildeten Anschlag 17 für den als Spreizhülse ausgebildeten Dübelkörper 20 auf, wobei der Anschlag 17 eine Bewegung des Dübelkörper 20 relativ zum Bolzen 10 nach hinten hin, insbesondere zum rückwärtigen Bereich 33 hin, begrenzt.

Beim Setzen des Ankers 1 wird der Bolzen 10 mit dem vorderen Bereich 32 voran entgegen der Auszugsrichtung 101 parallel zur Längsachse 100 des Bolzens 10 in das Loch 99 geschoben. Aufgrund des Anschlags 17 wird dabei auch der als Spreizhülse ausgebildete Dübelkörper 20 in das Loch 99 im Substrat 5 eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Loch 99 herausgezogen. Aufgrund seiner Reibung mit der Wand 98 des Lochs 99 bleibt der als Spreizhülse ausgebildete Dübelkörper 20 dabei zurück und es kommt zu einer Verschiebung des Bolzens 10 relativ zum Dübelkörper 20. Bei dieser Verschiebung dringt der Spreizkörper 12 des Bolzens 10 immer tiefer so in den Dübelkörper 20 ein, dass der Dübelkörper 20 vom Spreizkörper 12 radial gespreizt und an die Wand 98 des Lochs 99 angepresst wird. Durch diesen Mechanismus wird der Anker 1 im Substrat 5 fixiert.

Die Befestigungsanordnung weist ferner einen Sensor 40 auf, welcher wiederum ein Senderelement 41 und ein Empfängerelement 42 mit einer Auswerteeinheit 43 aufweist. Im vorliegenden Ausführungsbeispiel sind sowohl das Senderelement 41 als auch das Empfängerelement 42 am Anker 1, insbesondere an dessen Bolzen 10 angeordnet. Grundsätzlich kann aber beispielsweise eines dieser Elemente 41 oder 42 auch am Substrat 5 angeordnet sein.

Insbesondere sind sowohl das Senderelement 41 als auch das Empfängerelement 42 an der vorderen Stirnseite 31 angeordnet, also insbesondere an derjenigen Stirnseite, welche den Bolzen 10 nach vorne hin abschliesst, welche dem Grund 97 des Lochs 99 gegenüberliegt und/oder welche den vorderen Bereich 32 nach vorne hin begrenzt.

Wie in Figur 1 durch einen Pfeil angedeutet ist, sendet das Senderelement 41 ein akustisches Signal, insbesondere Ultraschallsignal, aus, welches vorderseitig am Bolzen 10 austritt. Dieses akustische Signal wird vom Substrat 5, insbesondere vom Grund 97 des Lochs 99, zum Bolzen 10 hin zurückgeworfen, und das zurückgeworfene Signal wird am Bolzen 10 vom Empfängerelement 42 erfasst. Der Sensor 40 wertet die Laufzeit des zurückgeworfenen Signals aus und generiert hieraus ein mit der axialen Position des Sensors 40 und somit mit der axialen Position des vorderen Bereichs 32 im Loch 99 korreliertes Signal, insbesondere ein mit dem Abstand des vorderen Bereichs 32 vom Grund 97 des Lochs 99 korreliertes elektrisches Signal.

Das mit der axialen Position des vorderen Bereich 32 im Loch 99 korrelierte elektrische Signal wird von der Auswerteeinheit 43 des Sensors 40 zu unterschiedlichen Zeitpunkten ausgewertet. Auf Grundlage dieser Auswertung generiert der Sensor 40, insbesondere dessen Auswerteeinheit 43, ein mit einer Verschiebung des Bolzens 10 im Loch 99 korreliertes Signal, insbesondere elektrisches Signal. Dieses Signal kann Rückschlüsse auf das Tragverhalten des Ankers 1 zulassen.

## Patentansprüche

1. Befestigungsanordnung, aufweisend einen Anker (1), der an einem vorderen Bereich (32) einen Ankerbereich (22) zum Verankern des Ankers (1) in einem Loch (99) in einem Substrat (5) und an einem rückwärtigen Bereich (33) eine Lastaufnahmeeinrichtung (18) zum Einleiten einer Zugkraft aufweist,
**dadurch gekennzeichnet,**
**dass** ein Sensor (40) zur Messung eines Abstandes des vorderen Bereichs (32) von einer Referenzposition des Substrats (5) vorgesehen ist.

2. Befestigungsanordnung nach Anspruch 1,
**dadurch gekennzeichnet,**
**dass** der Sensor (40) im Anker (1) integriert ist.

3. Befestigungsanordnung nach Anspruch 1,
**dadurch gekennzeichnet,**
**dass** zumindest ein Element des Sensors (40) vom Anker (1) gesondert ist.

4. Befestigungsanordnung nach einem der vorstehenden Ansprüche,
**dadurch gekennzeichnet,**
**dass** der Anker (1) einen Bolzen (10) aufweist, und
**dass** der Sensor (40) zur Messung eines Abstandes des vorderen Bereichs (32) des Bolzens (10) von einer Referenzposition des Substrats (5) vorgesehen ist.

5. Befestigungsanordnung nach Anspruch 4,
**dadurch gekennzeichnet,**
**dass** der Anker (10) ein Spreizanker ist, welcher an seinem Ankerbereich (22) einen dem Bolzen (10) benachbarten Dübelkörper (20), insbesondere eine Spreizhülse, sowie einen am Bolzen (10) vorgesehenen Spreizkörper (12) für den Dübelkörper (20) aufweist.

6. Befestigungsanordnung nach einem der Ansprüche 4 oder 5,
**dadurch gekennzeichnet,**
**dass** zumindest ein Element des Sensors (40) am Bolzen (10) angeordnet ist.

7. Befestigungsanordnung nach einem Ansprüche 4 bis 6,
**dadurch gekennzeichnet,**
**dass** der Sensor (40) ein Senderelement (41) zum Aussenden eines vorderseitig am Bolzen (10) austretenden Signals aufweist.

8. Befestigungsanordnung nach Anspruch 7,
**dadurch gekennzeichnet,**
**dass** das Senderelement (41) an der vorderen Stirnseite (31) des Bolzens (10) angeordnet ist.

9. Befestigungsanordnung nach einem der vorstehenden Ansprüche,
**dadurch gekennzeichnet,**
**dass** der Sensor (40) ein Empfängerelement (42) zum Erfassen eines vom Substrat (5) zurückgestrahlten Signals aufweist.

10. Befestigungsanordnung nach Anspruch 9,
**dadurch gekennzeichnet,**
**dass** das Empfängerelement (42) an der vorderen Stirnseite (31) des Bolzens (10) angeordnet ist.

11. Befestigungsanordnung nach einem der vorstehenden Ansprüche,
**dadurch gekennzeichnet,**
**dass** die Befestigungsanordnung eine Auswerteeinheit (43) aufweist, welche, zur Bestimmung einer möglichen Verschiebung des Ankers (1), ein vom Sensor (40) erzeugtes Signal an verschiedenen Zeitpunkten auswerten kann.

12. Messverfahren, bei dem eine Befestigungsanordnung nach einem der vorstehenden Ansprüche bereitgestellt wird und mittels des Sensors (40) ein mit dem Abstand des vorderen Bereichs (32) von der Referenzposition korreliertes Signal erzeugt wird.

13. Messverfahren nach Anspruch 12,
**dadurch gekennzeichnet,**
**dass** das mit dem Abstand des vorderen Bereichs (32) vom Referenzpunkt korrelierte Signal zur Bestimmung einer möglichen Verschiebung des Ankers (1) an verschiedenen Zeitpunkten ausgewertet wird.
